(19) **Europäisches Patentamt / European Patent Office / Office européen des brevets**

(11) **EP 4 378 020 B1**

(12) **EUROPEAN PATENT SPECIFICATION**

(45) Date of publication and mention
of the grant of the patent:
**09.07.2025 Bulletin 2025/28**

(21) Application number: **22754421.0**

(22) Date of filing: **26.07.2022**

(51) International Patent Classification (IPC):
*H01M 10/617* (2014.01)    *H01M 10/6555* (2014.01)
*H01M 10/6557* (2014.01)    *H01M 10/6563* (2014.01)
*H01M 50/233* (2021.01)    *H01M 10/39* (2006.01)

(52) Cooperative Patent Classification (CPC):
**H01M 10/617; H01M 10/6555; H01M 10/6557;**
**H01M 10/6563; H01M 50/233;** H01M 10/3909;
Y02E 60/10

(86) International application number:
**PCT/EP2022/070909**

(87) International publication number:
**WO 2023/006725 (02.02.2023 Gazette 2023/05)**

(54) **ELECTROCHEMICAL ENERGY STORAGE DEVICE**

VORRICHTUNG ZUR ELEKTROCHEMISCHEN ENERGIESPEICHERUNG

DISPOSITIF DE STOCKAGE D'ÉNERGIE ÉLECTROCHIMIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.07.2021 EP 21188163**

(43) Date of publication of application:
**05.06.2024 Bulletin 2024/23**

(73) Proprietors:
- **BASF SE**
  **67056 Ludwigshafen am Rhein (DE)**
- **NGK Insulators, Ltd.**
  **Nagoya City, Aichi Pref. (JP)**

(72) Inventors:
- **HEIDEBRECHT, Peter**
  **67056 Ludwigshafen (DE)**
- **THOMI, Philipp**
  **67056 Ludwigshafen (DE)**
- **JABCZYNSKI, Wolfgang**
  **67056 Ludwigshafen (DE)**
- **MALKO, Daniel**
  **67056 Ludwigshafen (DE)**
- **HAMADA, Hideyuki**
  **Nagoya, Aichi 467-8530 (JP)**
- **HOSHINO, Koji**
  **Nagoya, Aichi 467-8530 (JP)**

(74) Representative: **Kudla, Karsten**
  **Patentanwälte**
  **Isenbruck Bösl Hörschler PartG mbB**
  **Eastsite One**
  **Seckenheimer Landstrasse 4**
  **68163 Mannheim (DE)**

(56) References cited:
| | |
|---|---|
| EP-A1- 0 044 753 | US-A- 5 158 841 |
| US-A1- 2006 102 332 | US-A1- 2010 011 804 |
| US-A1- 2012 028 156 | US-A1- 2018 062 225 |
| US-A1- 2021 075 076 | |

**Description**

The invention relates to an electrochemical energy storage device which comprises a plurality of electrochemical cells in a housing, each electrochemical cell comprising an anode space and a cathode space which are separated by a solid electrolyte.

Electrochemical storage devices are also referred to in general as batteries or accumulators. Rechargeable batteries or accumulators, in particular, are used to enable electrical energy to be stored and used. To store large amounts of electrical energy, correspondingly powerful rechargeable batteries are required. For this purpose, it is possible to use batteries based on molten sodium and sulfur, for example. In order to achieve the corresponding capacity, a plurality of electrochemical cells that are electrically interconnected are generally used here in the electrochemical energy storage devices. Such electrochemical cells, which operate on the basis of a molten alkali metal as an anode and a cathodic reactant, generally sulfur, are described in WO-A 2017/102697, for example. Here, the molten alkali metal and the cathodic reactant are separated by a solid electrolyte which allows cations to pass through. At the cathode, there is a reaction between the alkali metal and the cathodic reactant. Where sodium is used as the alkali metal and sulfur is used as the cathodic reactant, this is the reaction of sodium and sulfur to form sodium polysulfide, for example. To charge the electrochemical energy storage device, the sodium polysulfide is decomposed into sodium and sulfur again at the electrode by the application of electrical energy.

The individual electrochemical cells are generally stacked in "battery packs" or, as an alternative, are placed parallel to one another in a housing. However, this arrangement has the disadvantage that uniform temperature control of the individual cells is possible only with difficulty. Throughflow of a heat transfer medium, in particular if the heat transfer medium flows perpendicular to the orientation of the electrochemical cells, leads to a temperature increase of said heat transfer medium and hence poorer cooling and accelerated aging of the electrochemical cells with the increase in distance traveled by the flowing heat transfer medium, owing to the absorption of heat by the heat transfer medium from the individual cells. However, this is disadvantageous for the operation of the electrochemical energy storage device. In particular, there is the risk that, if the temperature increase is too great, damage will occur to the individual electrochemical cells. If this leads to damage to the solid electrolyte, it can result in an uncontrolled reaction, which may lead to a fire that can be controlled only with difficulty in the electrochemical energy storage device.

Corresponding energy storage devices having sodium-sulfur batteries are described in JP-A 2000-297989 or US-B 7,955,725, for example.

It is a problem of the known electrochemical energy storage devices to provide a uniform temperature control. To achieve a uniform temperature control, WO-A 2019/206864 suggests an electrochemical energy storage device in which at least one electrochemical cell is accommodated in suspended fashion in the support structure. However, arranging the electrochemical cells in suspended fashion as described in WO-A 2019/206864 requires a complex design. Further, accommodating the electrochemical cells in a suspended fashion has the disadvantage that the density in which the electrochemical cells can be packed is limited.

For controlling the temperature in sodium sulfur batteries it is known for example from EP-A 0 044 753 or US 5,158,841 to provide tubes in the battery which run parallel to the battery cells and through which a heat transfer medium flows. US-A 2018/0062225 and US-A 2021/0075076 each describe using cooling fins which are in contact with the single cells for controlling the temperature. Due to the necessary distributors and collectors, cooling tubes through which a heat transfer medium, e.g. air, flows are technically complex to realize.

It is an objective of the present invention to provide an electrochemical energy storage device which allows controlling the temperature of electrochemical cells with little technical effort and a sufficient heat transfer.

This objective is achieved by an electrochemical energy storage device comprising a plurality of electrochemical cells in a containing space in a housing, wherein the electrochemical energy storage device comprises a first duct which runs parallel to the top or the bottom of the housing and one or more heat transfer members which are arranged in spaces between the electrochemical cells, wherein at least one of the heat transfer members protrudes into the first duct.

The electrochemical cells and the heat transfer members preferably are arranged in such a way that they run parallel, so that it is possible to minimize the distance between the electrochemical cells and the heat transfer members and optimize the heat transfer. Further, this arrangement allows for setting a homogeneous temperature in the whole electrochemical energy storage device.

The heat transfer members may be any type of heat transfer members, for example electrical elements like Peltier elements or electrical heating elements. However, particularly preferably, heat transfer members are used which have a shape of a plate, a solid rod-like shape or a hollow pipe shape. In this case, heat is transferred from the electrochemical cells to the heat transfer members and in the heat transfer members by heat conduction to at least one end of the heat transfer member at which the heat is transferred to the first duct, through which a heat transfer medium, particularly air, may flow. Besides air, the heat transfer medium also may be, for example, thermal oil or nitrogen. However, particularly preferably, the heat transfer medium is air.

The heat transfer members may have any shape. Preferably the heat transfer members are plates, solid rods or pipes having any cross sectional shape, for example circular, oval or polygonal with any number of edges, preferably 3 to 8 edges. Particularly preferably, the heat transfer members are plates, solid rods or pipes having a circular cross sectional shape.

For achieving a sufficient heating or cooling of the electrochemical cells, if the heat transfer members are in the form of pipes, the ratio of the number of electrochemical cells to the number of heat transfer members is in a range from 4 : 1 to 1 : 10, more preferred, the ratio of the number of electrochemical cells to the number of heat transfer members is in a range from 2 : 1 to 1:1 and particularly 1 : 1. The ratio of the number of electrochemical cells to the number of heat transfer members thereby depends on the size and shape of the electrochemical cells as well as on the size and shape of the heat transfer members.

Preferably, the electrochemical cells are arranged to form a square lattice in plan view, and the heat transfer members are each disposed at a central location of a unit lattice of the square lattice. Particularly preferably, the heat transfer members are each in contact with four cells constituting the unit lattice among the plurality of cells.

Independently of the arrangement of the electrochemical cells and the heat transfer members, each heat transfer member may be arranged in such a way that the distance between the heat transfer member and each electrochemical cell being adjacent to that electrochemical cell is the same. In this case, the heat transfer member is in the center of the space between the electrochemical cells. If the electrochemical cells are not in contact with the heat transfer member, it is also possible that the distances between the heat transfer member and the adjacent electrochemical cells differ. If the distances between the heat transfer member and the adjacent electrochemical cells differ, the heat transfer members are arranged off-center. However, preferably, the heat transfer members are arranged centrally.

If the heat transfer members are in the form of plates, it is preferred that the electrochemical cells are arranged in rows and the heat transfer members are placed between the rows of electrochemical cells.

Besides using heat transfer members in the form of pipes or heat transfer members in the form of plates it is further possible to use heat transfer members in different shapes, for example heat transfer members in the form of pipes in the inner part of the electrochemical energy storage device and heat transfer members in the form of plates which are arranged close to the walls of the housing and which run parallel to the walls of the housing. If heat transfer members in the form of plates are placed parallel to the walls of the housing, it is further possible to place the heat transfer members in the space between the outermost electrochemical cells and the walls of the housing.

The electrochemical cells preferably each comprise a compartment for an anode material and a compartment for a cathode material, the compartments for the anode material and for the cathode material being separated by a solid electrolyte.

The anode material used in the electrochemical cells preferably is a reactant which is liquid at operating temperature of the electrochemical cell and which is supplied to the anode side during discharging. The anode material is preferably electrically conductive. Preferred anode materials are alkali metals like lithium, sodium or potassium. Particularly preferably the anode material is sodium or potassium and particularly sodium.

The cathode material is a reactant which also is liquid at the operating temperature of the electrochemical cell and which is electrochemically reacted with the anode material. The cathode material conventionally forms a salt by chemical reaction with the anode material. Suitable cathode materials are for example sulfur or polysulfides. Also suitable as cathode material is a mixture of sodium chloride and a metal from transition group 8, as for example iron, nickel or cobalt, in combination with a liquid-melt electrolyte such as $NaAlCl_4$.

Other suitable cathode materials in conjunction with an alkali metal as anode material are, for example, oxides of nitrogen ($NO$ or $NO_2$), halogen, as for example chlorine, iodine or bromine, a metal halide, for example $NiCl_2$ or $FeCl_3$, a metalloide halide, for example $SiCl_4$ or $Si_2Cl_6$. Also possible is the use of a solid salt which is able to change its redox potential. An example of such a salt is $NaFePO_4$.

However, particularly preferably, the cathode material is sulfur or a polysulfide.

The electrochemical energy storage devices preferably contains electrochemical cells which have a ratio of diameter to length in a range from 1 : 2 to 1 : 100, more preferred in a range from 1 : 3 to 1 : 70 and particularly in a range from 1 : 4 to 1 : 50.

The cross sectional area of the electrochemical cells may have any shape, however, it is particularly preferred if the shape of the cross sectional area is cylindrical.

If, in the context of the present invention, the term "diameter" is used for non-cylindrical shapes, this term refers to the hydraulic diameter which is defined by

$$d_h = 4\frac{A}{U}$$

wherein $d_h$ is the hydraulic diameter, A the cross sectional area and U the perimeter.

The number of cells used in the electrochemical energy storage device depends on the size of the electrochemical cells. Particularly preferably, the electrochemical cells which are used in the electrochemical energy storage device are sodium-sulfur cells. Such sodium-sulfur cells are usually cylindrical and have a diameter in a range of from 6 to 20 cm and a length in a range of from 50 to 200 cm. Corresponding sodium-sulfur cells are known to those skilled in the art and are described in WO-A 2017/102697, for example.

For achieving a sufficient heat transfer from the electrochemical cells to the heat transfer members, it is possible that the heat transfer members and the electrochemical cells are in contact. Alternatively, it is also possible that there is no contact between the electrochemical cells and the heat transfer members or that only a part of the electrochemical cells and the heat transfer members are in contact.

Independently of whether the electrochemical cells are in contact with the heat transfer members or not, it is preferred that the space between the heat transfer members and the electrochemical cells is filled with a liquid or solid material. If the spaces are filled with a solid material, it is particularly preferred that the solid material is a particulate material, particularly a pulverulent material. The mean particle diameter of the particles of the particulate material preferably is in a range from 0.1 to 2 mm, more preferred in a range from 0.5 to 1 mm. The solid material used for filling the spaces between the electrochemical cells and the heat transfer members preferably is any inorganic solid material which is stable at operating temperature, such as sand, glass, metal or ceramics. A particularly preferred material is sand. It is a further advantage that by filling the space between the electrochemical cells and the heat transfer members, the heat transfer from the electrochemical cells to the heat transfer members is improved.

Using a solid material for filling the spaces between the electrochemical cells and the heat transfer members has the additional effect that the position of the electrochemical cells is stabilized and the electrochemical cells are fixed. Even if the electrochemical energy storage device moves, the electrochemical cells remain at their places and cannot bounce against each other which may result in a damage of the electrochemical cell. Therefore, it is particularly preferred to use a solid material for filling the spaces between the electrochemical cells and the heat transfer members. Using sand as solid material for filling the spaces between the electrochemical cells has the additional advantage that in case of a damage of an electrochemical cell, the solid material functions as a fire extinguisher.

Usually, electrochemical cells generate heat during operation. This heat is dissipated by the heat transfer members which in this case operate as cooling elements. Additionally a part of the heat is dissipated to the ambient via the outer walls of the electrochemical storage device. Due to this additional heat dissipation to the ambient, by uniform cooling of all electrochemical cells, the electrochemical cells which are close to the walls of the electrochemical energy storage device are cooler than the electrochemical cells which are placed closer to the center of the electrochemical storage device. For achieving a uniform temperature of all electrochemical cells it is therefore necessary to dissipate more heat from the electrochemical cells which are placed close to the center of the electrochemical energy storage device than from the electrochemical cells which are placed closer to the walls. This may be achieved for example by designing the heat transfer members in such a way that the surface area of outer heat transfer members which are arranged closer to the walls of the housing is smaller than the surface area of inner heat transfer members which are arranged in the middle of the housing or that the volume flow of the heat transfer medium through the heat transfer members which are arranged closer to the walls of the housing is smaller than the volume flow of the heat transfer medium through the heat transfer members which are arranged in the middle of the housing. Preferably the heat transfer members are designed such that the ratio of the surface area of the outer heat transfer members to the surface area of the inner heat transfer members is in a range from 0.1 to 1.

If the heat transfer members are plates which extend from one wall of the housing to the opposite wall of the housing, the wall thickness of the plates may vary to achieve a homogeneous temperature in adjacent electrochemical cells. For such a homogenization of the temperature in the electrochemical cells, it is particularly preferred that the walls of the plates close to the walls of the housing are thicker. Further, for achieving a uniform temperature of the electrochemical cells is also possible to provide plates having a larger distance between the opposite walls of the plates in the center area of the housing of the electrochemical energy storage device and separate plates having a smaller distance between the walls close to the walls of the housing.

Besides only two different sizes of the heat transfer members it is further possible to provide heat transfer members in more than two different sizes, for example three or four or even more different sizes. The number of different sizes depends on the number of electrochemical cells and the arrangement of the cells. More than two different sizes for example may be advantageous if it is not possible to achieve an essentially uniform temperature in the housing.

According to the invention, the electrochemical energy storage device comprises a first duct which runs parallel to the top or the bottom of the housing and into which the heat transfer member protrude. By this design, the heat transfer from the heat transfer members to a heat transfer medium, preferably air, which flows through the first duct, is intensified.

Additionally, the electrochemical energy device also may comprise a second duct which is located at the bottom of the housing, if the first duct is located at the top of the housing, or at the top of the housing, if the first duct is located at the bottom of the housing.

If the electrochemical energy device comprises the additional second duct, the heat transfer members preferably are connected with the second duct or extend into the second duct.

As particularly for starting the charging or discharging of the electrochemical energy device it may be necessary to heat the electrochemical energy device, preferably a heater is disposed at the bottom below the cells, near the walls of the housing, above the cells, or a combination of these. If a bottom heater is used, it is further preferred, that the lower end of the heat transfer members ends above the bottom heater.

For facilitating mounting of the electrochemical energy device, it is preferred, that the housing comprises a box having an opening and a lid for closing the opening. To reduce the heat being transferred to the environment, particularly during heating of the electrochemical cells, it is further preferred that the box and the lid have insulating capability. For this purpose, the box and the lid may be equipped with an insulating material which either is mounted on the outside of the box or on the inner side of the walls of the box. The insulating material may be any insulating material known to a skilled person, for example mineral wool, glass wool, or other inorganic, microporous insulation materials.

Preferably, the first duct is disposed between the box and the lid above the electrochemical cells. This arrangement allows for an easy assembly of the electrochemical cell and further an easy access to the first duct for example for maintenance.

For transferring heat to a medium flowing through the first duct, at least one heat transfer member protrudes into the first duct. Particularly preferably, all heat transfer members have the same length, so that all heat transfer members protrude into the first duct.

The heat transfer members protruding into the first duct may be in contact with a surface of the first duct opposite of the containing space in a direction of extension of the heat transfer members.

For improving heat transfer, it is preferred that the electrochemical energy storage device further comprises a first intake fan capable of supplying air to the first duct from the outside, wherein the first duct includes a first intake port to which air is supplied from the first intake fan, a first internal space to allow heat to be transferred from the heat transfer members to air supplied from the first intake port, and a first exhaust port from which air having passed through the first internal space is discharged to the outside.

Particularly if a second duct at the bottom of the electrochemical energy storage device is provided, it is further preferred that the electrochemical energy storage device further comprises a second intake fan capable of supplying air to the second duct from the outside, wherein the second duct includes a second intake port to which air is supplied from the second intake fan, a second internal space to which air is supplied from the second intake port, the second internal space being located so that the bottom heater is interposed between the second internal space and a range of arrangement of the heat transfer members in the containing space, and a second exhaust port from which air having passed through the second internal space is discharged to the outside. The air which flows through the second duct in this case also improves cooling of the electrochemical cells because heat is transferred to the second duct and by air flowing through the second duct, this heat is dissipated to the environment by the air leaving the second duct.

As usually heat is dissipated to the ambient by the walls of the housing of the electrochemical energy storage device and for this reason, the electrochemical cells close to the wall of the housing need less cooling than the electrochemical cells in the center of the housing, the inner heat transfer members which are closer to the center of the housing and the outer heat transfer members which are closer to the walls of the housing may protrude into different fluid circuits in the first duct.

Besides providing only two fluid circuits, it is also possible to provide more than two fluid circuits. Increasing the number of fluid circuits allows for a more specific setting of the heat transfer parameters in the electrochemical energy storage device as each fluid circuit can be operated with different parameters.

If the first duct and/or the second duct comprises more than one closed fluid circuit, to control the temperature, each fluid circuit may comprise at least one external heat exchanger which is connected to an entrance into a sub-duct of the first duct and/or the second duct. If the flow circuits are open flow circuits, the first and/or second ducts each may be connected with at least one blower and if additional heating is required, also heating elements may be provided between the heat transfer members and/or in the heat transfer members, the first ducts and/or the entries into the first ducts.

For a sufficient heat transfer, it is preferred that the heat transfer members are made of a material which has good heat conducting properties. Suitable materials from which the heat transfer members may be made are one or more types of metal selected from the group consisting of aluminum, copper, steel, and alloys comprising at least one of these metals.

Illustrative embodiments of the invention are shown in the figures and explained in more detail in the following description.

In the figures:

| Figure 1 | shows an electrochemical energy storage device with a schematically illustrated temperature control circuit; |
| Figure 2 | shows a schematic sectional view of an electrochemical energy storage; |
| Figure 3 | shows a plan view on an electrochemical energy storage according to figure 2; |
| Figures 4 to 6 | show different arrangements of the upper end of the heat transfer members; figures 5 and 6 are not according to the invention; |
| Figure 7 | shows a top view on electrochemical |

cells and heat transfer members of an electrochemical energy storage device, the heat transfer members being plates,

Figure 8       shows a top view on electrochemical cells and heat transfer members of an electrochemical energy storage device, the heat transfer members being pipes in a first embodiment,

Figure 9       shows a top view on electrochemical cells and heat transfer members of an electrochemical energy storage device, the heat transfer members being pipes in a second embodiment.

Figure 10      shows an arrangement of the electrochemical cells in a triangular lattice;

Figure 11      shows temperature distributions as result of simulation calculations.

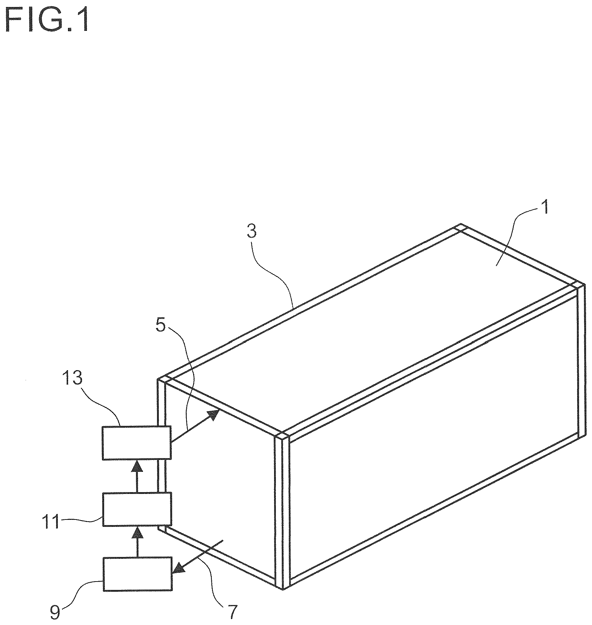

Figure 1 shows an electrochemical energy storage device with a schematically illustrated temperature control circuit.

An electrochemical energy storage device 1 comprises a housing 3 which encloses electrochemical cells and heat transfer members. To increase the energy efficiency of the electrochemical energy storage device 1, it is preferred if the housing 3 is embodied in a thermally insulated way. Here, the thermal insulation can be applied to the inside or the individual housing walls or to the outside. Alternatively, it is also possible to produce the housing 3 from a thermally insulating material. By way of example, the housing 3 can be produced from metal sheets, in particular steel sheets, which are thermally insulated on the inside or on the outside. In this context, any desired insulating material known to those skilled in the art can be used for the thermal insulation. As an alternative, it is also possible to produce the housing from a mineral material, e.g. as masonry. However, the advantage of the housing 3 consisting of steel sheets is that, in this case, it is possible to provide a transportable electrical energy storage device 1, whereas an electrochemical energy storage device 1 in a fixed location can also be enclosed with a brick housing 3.

The housing has an inlet 5 and an outlet 7 for a heat transfer medium. The heat transfer medium may flow from top to bottom as shown here or, as an alternative, from bottom to top. The inlet preferably is connected to a distributor by which the heat transfer medium is distributed to the heat transfer members which run parallel to the electrochemical cells in the housing 3. For withdrawing the heat transfer medium from the electrochemical energy storage device 1, the heat transfer members are connected to a collector which is connected to the outlet 7. As an alternative to the embodiment shown in figure 1 with the distributor above the electrochemical cells and the collector below the electrochemical cells, it is also possible to arrange both, the distributor and the collector above the electrochemical cells or below the electrochemical cells, preferably above the electrochemical cells.

If it is intended to provide at least two fluid circuits for the heat transfer medium, each fluid circuit comprises an inlet 5 and an outlet 7 which are connected to the heat transfer members of the respective fluid circuit.

For controlling the temperature, the heat transfer medium removed from the housing 3 via the outlet 7 is then passed through a heat exchanger 9, a heating device 11, and a delivery device 13 and is then re-introduced into the housing 3 via the inlet 5. In this case, the heat exchanger 9, the heating device 11 and the delivery device 13 are preferably arranged in a channel, wherein the channel can be embodied as a pipe or as a channel with any other cross section, e.g. as a rectangular channel.

The heat exchanger 9 is used, in particular, to cool the heat transfer medium when the heat transfer medium is used to cool the electrochemical cells, as is necessary, for example, in the case of alkali metal-sulfur cells during the charging and discharging process. During this process, the heat transfer medium in the heat exchanger 9 releases heat to another heat transfer medium, wherein water or any other desired conventional heat transfer medium, e.g. a thermal oil, can be used as a heat transfer medium here, for example.

If heat has to be supplied either for the operation of the electrochemical cells or for starting up the electrochemical cells, the heating device 11 is provided. In the heating device 11, the heat transfer medium is heated. Here, heating can be accomplished directly or indirectly, wherein indirect heating is accomplished, for example, by using a heating medium which releases heat to the heat transfer medium for controlling the temperature of the electrochemical cells. However, it is only possible here to use heating media which are stable at temperatures above the temperature to which the heat transfer medium for heating the electrochemical cells is to be heated. Suitable heating media would be molten salts, for example. There is therefore a preference for the use of a heating device in which the heat transfer medium is heated electrically or inductively or, alternatively, by burning a fuel.

As an alternative to the embodiment illustrated here having a heat exchanger 9 for cooling and a separate heating device 11, it is also possible to use just one heat exchanger, which is used both for heating and for cooling. For this purpose, the temperature of the heat transfer medium can be varied, either for heating or for cooling, or a combination unit is used which cools by means of a heat transfer medium and additionally contains electric heating elements for heating, by means of which the heat transfer medium can be heated when required to control the temperature of the electrochemical cells.

The delivery device 13 is dependent on the heat transfer medium used. For a fluid, which is preferably used, the delivery device 13 is a pump, for example. The delivery device 13 is dimensioned in such a way that a quantity of heat transfer medium sufficient to control the temperature of the electrochemical cells can be passed through the heat transfer members.

Besides the embodiment shown in figure 1 having a closed fluid circuit for the heat transfer medium, it is also possible to provide an open circuit. Such an open circuit preferably is used if the heat transfer medium is air. In this case, ambient air is fed through the inlet 5 into the housing 3 and removed from the housing through the outlet 7. In difference to the embodiment shown here, the air is blown from the outlet into the surroundings. For feeding the air through the electrochemical energy storage device, the delivery device 13, particularly a blower, is connected to the inlet 5 and/or the outlet 7. If an additional heating is intended, it is possible to provide the heating device 11 in the inlet to heat the air which is sucked in by the blower. Alternatively, it is possible to arrange the heater in the distributor or in the heat transfer members through which the air flows. Further, it is also possible to arrange heating devices between the electrochemical cells and the heat transfer members.

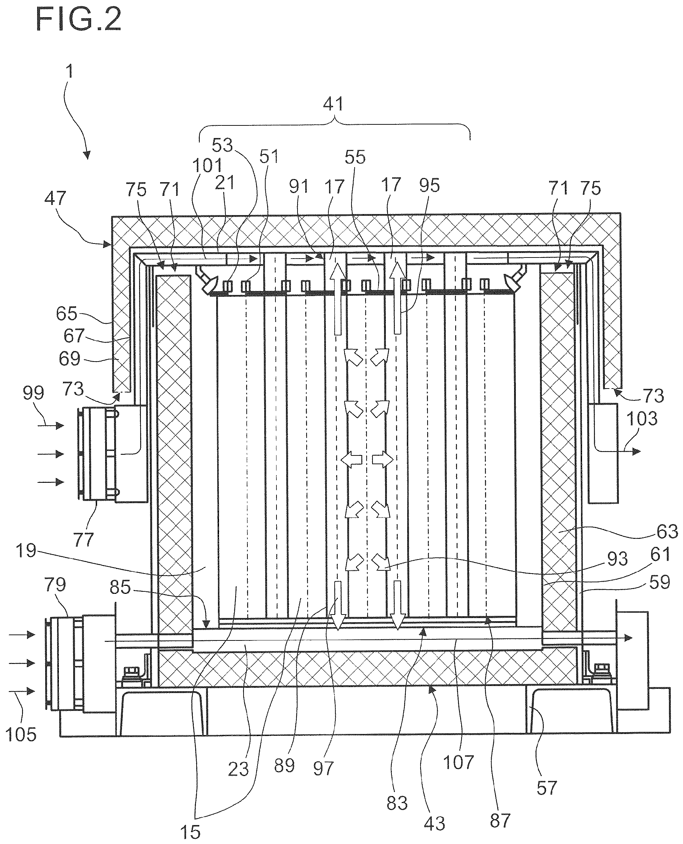

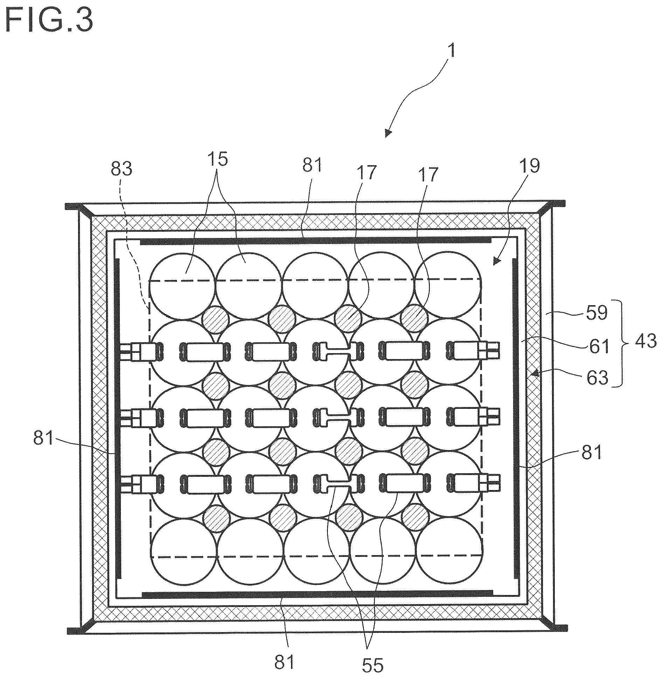

Figures 2 and 3 show a sectional view of an electrochemical energy storage device and a plan view on the respective energy storage device having heat transfer members by which heat is transferred by heat conduction.

The electrochemical energy storage device 1 comprises a battery pack 41 which is composed of a plurality of single electrochemical cells 15. The electrochemical cells 15 are placed in the housing 3, which comprises a box 43, which preferably has a rectangular parallelepiped shape and encloses the space 19 in which the electrochemical cells 15 are placed. The box 24 has an opening 45 which is closed by a lid 47. As can be seen in figure 2, the lid 47 preferably comprises a rim 49 which extends downwards and surrounds the upper part of the box 43. The size of the lid 47 is such that a first duct is formed between the box 43 and the lid 47.

Besides the battery pack 41, the box 43 comprises a second duct 23 below the electrochemical cells 15 and heat transfer members 17, which are arranged between the electrochemical cells 15. The space 19 which is not filled with the electrochemical cells 15 and the heat transfer members 17 preferably is filled with a solid or liquid medium, particularly a solid particulate medium, for example sand like vermiculite or silica sand. The liquid or solid medium particularly is used to reduce the influence of the surroundings in the event of failure such as breakage, abnormal heating or leakage of active material in a single electrochemical cell 15.

For connecting the electrochemical cells 15 to form the battery pack 41, each electrochemical cell comprises a negative electrode terminal 51 which projects from the center of the upper end of the electrochemical cell 15 in the state mounted in the housing 3, and a positive electrode terminal 53 which projects from the peripheral edge of the electrochemical cell 15. In the battery pack 41, one positive electrode terminal 53 and a negative electrode terminal 51 arranged adjacent to each other are electrically connected by a connection terminal 55, thereby forming a string in which a plurality of electrochemical cells 15 are connected in series. A part of the connection terminals 55 is shown in figure 3. In the battery pack 41, a plurality of strings are connected in parallel to form a block, and the plurality of blocks are connected in series.

The box 43 is mounted and fixed on a base 57, which supports the box 43 downward. The box 43 preferably is composed of a metallic outer plate 59 facing the outside, metallic inner plate 61 facing the inside, and a heat insulating material 63, having electrical insulating properties and which is filled between the outer plate 59 and the inner plate 61.

The lid 47 preferably is detachably attached to the box 43 and is placed on the box 43 when the electrochemical energy storage device 1 is used, and is removed from the box 43 when the battery pack 41 is taken in and out.

The lid 3 preferably is composed of a metallic outer plate 65 facing the outside, a metallic inner plate 67 facing the inside, and a heat insulating material 69 being filled between the outer plate 65 and the inner plate 67.

Preferably, the heat insulating materials 63, 69 are used in an atmospheric atmosphere, and the box 43 and the lid 47 have an atmospheric heat insulating structure. More preferably, the outer plate 59 and the inner plate 61 are provided in such a shape and arrangement that they do not contact each other via the heat insulating material 63, and the outer plate 65 and the inner plate 67 are also provided in such a shape and arrangement that they do not contact each other via the heat insulating material 69. For example, a configuration is adopted in which the outer plate 59 and the inner plate 61 as well as the outer plate 65 and the inner plate 67 include a space in between, by which in addition to the thermal insulation also electrical insulation is ensured.

By configuring the box 43 and the lid 57 as described above, a gap 71 is formed between the outer plate 59 and the inner plate 61 and a gap 73 is formed between the outer plate 65 and the inner plate 67. If air is present inside the box 43 and the lid 47 and is heated and expands during use, the air flows out to the outside through the gaps 71, 73. As a result, deformation of the box 43 and the lid 47 due to thermal expansion of air is suppressed.

Alternatively, the box 43 and/or the lid 47 may have a vacuum heat insulating structure by adopting a vacuum heat insulating board as the heat insulating material 63, 69. In this case, the inner plates 61, 67 and the outer plates 59, 65 are tightly connected.

For forming the first duct 21 between the box 43 and the lid 47, preferably an insulating cushioning material 75 is disposed on the open end portion of the box 43 having the gap 71 formed therein. The first duct 21 is formed on the cushioning material 75 and extends between the outer plate 59 of the box 43 and the inner plate 67 of the lid 47.

The first and second ducts 21, 23 are respectively provided with a first fan 77 and a second fan 79 which may be electric intake fans. The first fan 77 and the second fan 79 are provided for supplying external air to the first duct 21 and the second duct 23, respectively. The operation of the first and second fans 77, 79 may be controlled by a fan control unit.

In addition, side heaters 81 may be provided on the surface of the inner plates 61 on each side of the box 43. Further, a bottom heater 83 may be provided on the top surface 85 of the second duct 23.

The upper surface of the bottom heater 83 is horizontal, and the battery pack 41 is arranged on the upper surface of the bottom heater 83. More specifically, a plate-like or sheet-like insulator 87 mode of, for example mica, is interposed between the bottom heater 83 and the battery pack 41, thereby ensuring insulation between the bottom heater 83 and the battery pack 41.

The side heaters 81 and the bottom heater 83 preferably are electric heaters for heating the inside of the box 43. Typically, the side heaters 81 and the bottom heater 83 are used to maintain the inside of the box 43 at an operating temperature so as to keep the active material of each electrochemical cell 15 of the battery pack 41 in a molten state when the electrochemical energy storage device 1 is in a standby state in which the battery pack 41 is not charged or discharged. The operation of the side heaters 81 and the bottom heater 83 is controlled by a heater control unit.

For releasing heat generated in the single electrochemical cells 15 during operation to the outside of the space 19, rod shaped heat transfer members 17 are provided. In the embodiment shown in figures 2 and 3, having heat transfer members for transferring heat by heat conduction, the heat transfer members 17 are made of a material having high thermal conductivity, typically a metal having high thermal conductivity. Preferably, aluminum is used as the material of the heat transfer members 17. However, aluminum, steel, copper or an alloy of some of these metals may be used.

As can be seen in figure 3, the electrochemical cells 15 are circular in plan view. If heat transfer members operating by heat conduction in the material of the heat transfer members, it is further preferred, that each electrochemical cell 15 is in contact with the adjacent electrochemical cells 15. The electrochemical cells preferably are arranged in a rectangular lattice and the heat transfer members 17 are arranged in the space which is surrounded by four electrochemical cells 15. As adjacent electrochemical cells 15 are in contact, the distance from center to center of two adjacent electrochemical cells 15 corresponds to the diameter of one electrochemical cell 15. The heat transfer member is located at the intersection point of the diagonal lines of the rectangular lattice.

The heat transfer members 17 also preferably have a circular cross sectional area and are disposed in the space surrounded by the electrochemical cells 15 such that the longitudinal axes of the electrochemical cells 15 and the heat transfer members 17 run parallel and in a manner in which the heat transfer members 17 are in contact with all electrochemical cells 15 surrounding the respective heat transfer member 17.

However, if the heat transfer members are designed as shown in figure 3, the heat transfer members 15 are only in line contact (point contact in the cross-sectional view shown in figure 3) with the surrounding electrochemical cells 15. From the viewpoint of improving heat transfer performance, a cross-sectional shape perpendicular to the longitudinal direction of the heat transfer members 17 may be determined so that the heat transfer members 17 and the electrochemical cells 15 are in surface contact. For example, all or most of the space between the electrochemical cells 15 may be a region in which the heat transfer member 17 is to be disposed and the heat transfer members 17 have a cross sectional shape corresponding to the cross sectional shape of this region. In such a case, the side surface of the heat transfer members 17 are in wide contact with the side surface of the electrochemical cells 15 and high heat transfer performance is obtained.

If a suitable heat transfer can be obtained in another way, it is further possible, that the heat transfer members 17 and the electrochemical cells 15 are not in contact. In this case, heat is transferred from the electrochemical cells 15 to the heat transfer members 17 by heat conduction through the medium which is in the space between the electrochemical cells 15 and the heat transfer members 17.

Besides having a circular cross sectional area, the heat transfer members 17 also may have any other shape, for example the shape of a rectangular column, a triangular column or even a shape with irregularities on the side surface along the longitudinal direction so as to increase the surface area, as long as the heat transfer members 17 ca be disposed in the space between the electrochemical cells 15. Further, it is also possible, that a plurality of heat transfer members 17 is arranged in each space between the electrochemical cells 15.

The heat transfer members 17 may have a hollow pipe shape or a solid rod shape as long as good heat transfer performance is ensured. A hollow pipe shape is advantageous not only in the terms of costs but also in that sand can be filled inside. More specifically, from the viewpoint of reducing the interior of the box 43 with a certain amount of electrochemical cells 15, it is necessary to fill the interior of the box 43 with a predetermined amount or more of sand material. The type of sand material to be filled in the space 19 may be the same as or different from the type of sand material to be filled in the pipe-like heat transfer members 17. Further, in one electrochemical energy storage device 1, pipe-shaped heat transfer members 17 and rod-shaped heat transfer members 17 may coexist.

When the heat transfer members 17 have a pipe shape, both ends of the heat transfer members 17 may be closed or opened independently. Alternatively, both ends may each independently be provided with a removable lid.

Besides being disposed in all spaces surrounded by electrochemical cells 15 as shown in figure 3, the heat transfer members 17 also may be arranged only in the spaces between the electrochemical cells 15 near the center of the battery pack 41 and the arrangement of heat transfer members 17 may be omitted in the spaces between the electrochemical cells 15 close to the walls of the box 43. This is possible as heat is more likely to be released outside in the vicinity of the walls of the box 43 than in the vicinity of the center of the box 43.

As can be seen in figure 2, the lower end 89 of each heat transfer member 17 is in contact with the insulator 87. On the other hand, the upper end 91 of the heat transfer members 17 is disposed so as to protrude at least partly into the first duct 21. Preferably, the upper end 91 of the heat transfer member 17 is disposed so as to be close to the inner plate 67 of the lid 47 forming the upper surface of the first duct 21, and particularly so as to be in contact with the upper surface of the first duct 21.

For controlling the electrochemical cell, it is preferred to provide a controller for controlling the operation of each part. The controller may be constituted by a general-purpose or special-purpose computer having a CPU, ROM, RAM or the like, and functions as the controller by executing an operation program stored in a predetermined storage medium incorporated in or externally connected to the computer. The controller mainly includes a battery operation control unit and a temperature control unit as virtual components realized by execution of the operation program.

The battery operation control unit controls charging and discharging operations of the electrochemical energy storage device 1 in the battery pack 41, power supply and reception operations between the electrochemical energy storage device 1 and the outside, and the like.

The temperature control unit controls the temperature inside the electrochemical energy storage device 1 (in particular, the temperature of the space 19) during the operation (charging and discharging) and the standby of the electrochemical energy storage device 1 on the basis of an output signal (temperature signal) from a temperature sensor provided at a predetermined position of the box 43. The temperature control unit includes a fan control unit for controlling the operations of the first fan 77 and the second fan 79, and a heater control unit for controlling the operations of the side heaters 81 and the bottom heater 83.

During the operation of the electrochemical energy storage device 1, charging and discharging operations in the battery pack 41, power supply and reception operations between the battery pack 41 and the outside are executed under the control of the battery operation control unit, and at this time, the fan control unit appropriately operates the first fan 77 and the second fan 79 to blow low-temperature air from the outside into the first duct 21 and the second duct 23, thereby maintaining the operating temperature in the electrochemical energy storage device 1. Thus, the charge/discharge operation and the power supply/reception operation are performed while the operating temperature is maintained.

On the other hand, during standby, the electrochemical energy storage device is maintained at the operating temperature mainly by turning on/off the energization states of the side heaters 81 and the bottom heater 83 based on the output signal from the temperature sensor by the heater control unit.

During operation, reaction heat is generated in each electrochemical cell 15. The reaction heat is transferred to the periphery of the respective electrochemical cell 15 an then is transferred to the heat transfer member 17 having higher thermal conductivity than the medium filled in the space 19. The heat transferred from the electrochemical cell 15 to the heat transfer member 17 is indicated by arrows 93 in figure 2.

As shown by arrows 95, 97, the heat transferred to the heat transfer member 17 rapidly moves to the upper end 91 and the lower end 89 of the heat transfer member 17.

During operation of the electrochemical energy storage device, external air 99 having a temperature below the temperature inside the box 43 is introduced into the first duct 21 by activating the first fan 77. The air flows through the first duct 21 as shown with arrow 101. The air flowing through the first duct 21 absorbs heat generated from the electrochemical cells 15 by cooling the lower surface of the first duct 21. Additionally, the upper ends 91 of the heat transfer members 17 are cooled by the air flowing through the first duct 21. The thus heated air then is released to the environment as shown with arrows 103.

If present, also the second fan 79 is operated during operation of the electrochemical energy storage device 1 to introduce external air 105 into the second channel 23. The air flows through the second channel 23 as indicated with arrow 107, thereby cooling the upper surface of the second duct 23 and thus the space 19 which contains the battery pack 41 and also the lower end 89 of the heat transfer members 17. Heat transfer from the space 19 to the air flowing through the second duct 23 is possible even though the insulator 87 and the bottom heater 83, which is not in operation during normal operation of the electrochemical energy storage device 1, are provided between the electrochemical cells 15 and the heat transfer members 17 due to the high temperature differences between the electrochemical cells at operation and the external air.

To further improve heat transfer from the heat transfer members 17 to the air flowing through the second duct 23, it is possible to design the heat transfer members 17 such that the lower end 89 of the heat transfer members 17 protrudes into the second duct 21.

It is a further advantage of the heat transfer members 17, that also during standby of the electrochemical energy storage device 1, when the battery pack 41 is heated by the side heaters 81 and the bottom heater 83, heat from the bottom heater 83 is transferred to the electrochemical cells 15 by heat transfer through the heat transfer members 17, thereby maintaining the temperature more efficiently in the electrochemical cells 15.

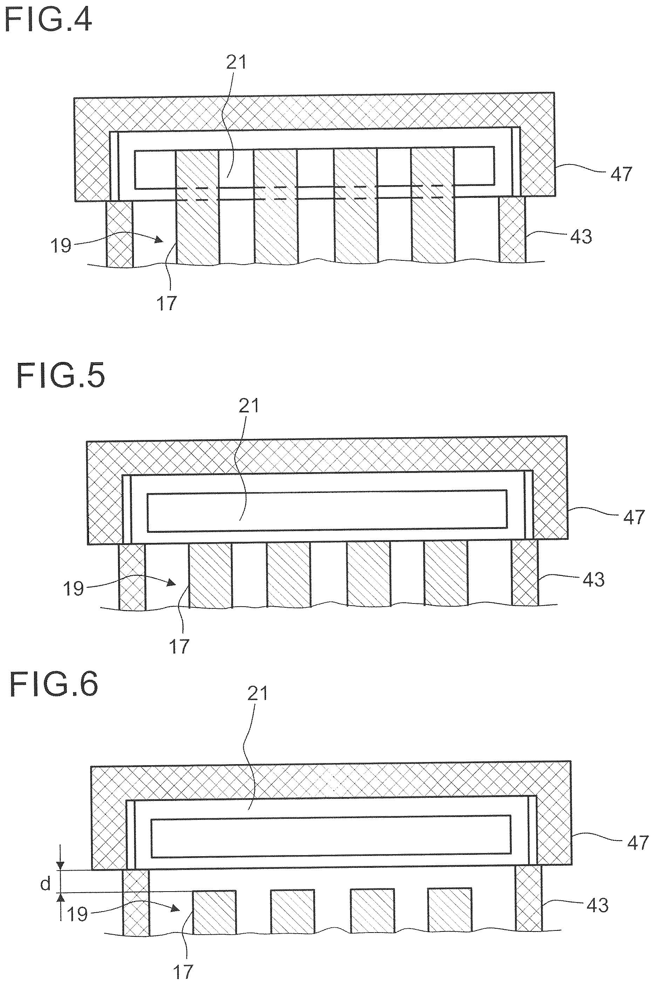

According to the invention, at least one heat transfer member protrudes into the first duct. The further heat transfer members may be arranged as shown in figures 4 to 6.

The arrangement shown in figure 4 corresponds to the arrangement of figure 2, where all heat transfer members 17 protrude into the first duct 21 and in which the heat transfer members 17 are cooled by the air flowing around the upper end 91 of the heat transfer members 17 which protrudes into the first duct 21, thereby ensuring heat dissipation during operation.

However, even if at least one of the heat transfer members 17 does not protrude into the first duct 21, sufficient heat dissipation by the heat transfer members 17 can be realized. The heat transfer members may have a length as shown in figure 5, not according to the invention, where the upper end of the heat transfer members 17 is in contact with the lower surface of the first duct 21. In this case, the lower surface of the first duct 21 does not need any through holes through which the heat transfer members 17 are guided. In this embodiment, the heat is transferred from the upper end of the heat transfer members 17 to the lower surface of the first duct 21 and from the lower surface of the first duct 21 to the air flowing through the first duct.

It even may be sufficient as shown in figure 6, also not according to the invention, if the upper end of at least one heat transfer member 17 ends at a distance d below the lower surface of the first duct 21. In this case heat is transferred by the medium between the upper end of the heat transfer members 17 and the lower surface of the first duct 21 to the lower surface of the first duct 21 and then from the lower surface of the first duct 21 to the air flowing through the first duct 21. If the heat transfer members 17 have a length as shown in figures 5 and 6, it is possible to manufacture the upper duct 21 without the through holes for the heat transfer members 17.

For example, considering that the temperature in the vicinity of the center of the electrochemical energy storage device 1 tends to be higher than that in the outer peripheral portion, the heat transfer members 17 in the vicinity of the center of the electrochemical energy storage device may protrude into the first duct 21 and may not protrude into the first duct 21 in the outer peripheral portion.

As an alternative or additionally, it is also possible to provide solid heat transfer members 17 near the center of the electrochemical energy storage device 1 and pipe-shaped heat transfer members 17 in the outer peripheral portion, and/or to provide heat transfer members 17 having a larger cross sectional area nearer to the center of the electrochemical energy storage device and having a smaller cross sectional area if located in the outer peripheral portion.

In this way, by selectively using the heat transfer members 17 having different geometry and thus different cooling capacities, depending on the locations in accordance with the required cooling performance, the temperature distribution of the electrochemical energy storage device 1 as a whole can be made uniform.

When the heat transfer member 17 penetrates the first duct 21, at least one heat radiation fin may be attached the portion of the heat transfer member 17 protruding into the first duct 21. In this case, heat dissipation from the heat transfer member 17 in the first duct 21 is further enhanced.

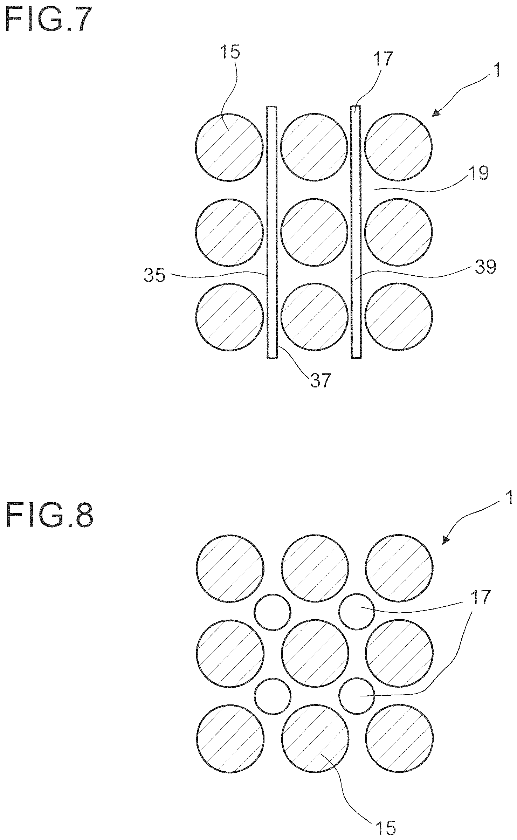

The heat transfer members 17 used in the electrochemical energy storage device may have any suitable cross sectional shape. Examples of possible shapes are shown in figures 7 to 9.

Figure 7 shows a top view on electrochemical cells and heat transfer members of an electrochemical energy storage device, the heat transfer members being plates.

If the heat transfer members 17 are in the form of plates as shown in figure 7, the electrochemical cells 15 are arranged in rows and the heat transfer members 17 are arranged between the rows of the electrochemical cells 15.

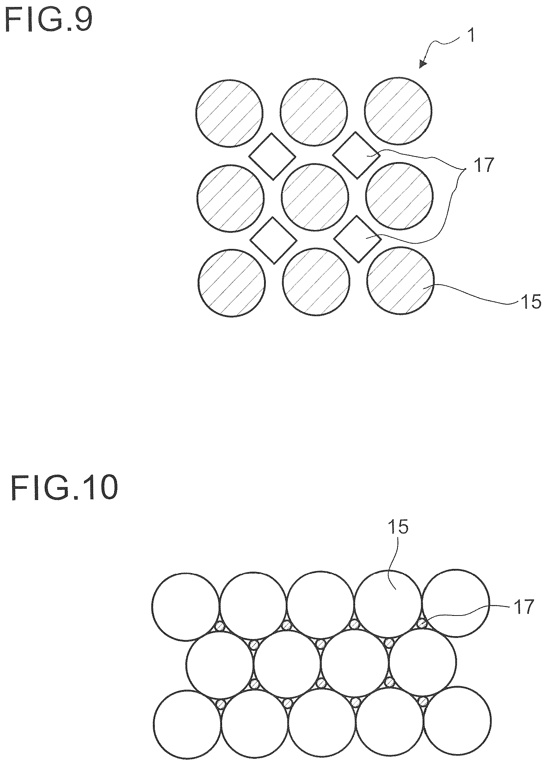

Embodiments with heat transfer members 17 being pipes or rods are shown in figures 8 and 9. For achieving a sufficient heat transfer from the electrochemical cells 15 to the heat transfer members 17, the electrochemical cells 15 are arranged around the heat transfer members 17. Besides arranging four electrochemical cells 15 around one heat transfer member 17 it is also possible to arrange any other number of electrochemical cells 15 around one heat transfer member 17, for example 3, 5, 6 or 8 electrochemical cells 15. The number of electrochemical cells 15 being arranged around one heat transfer member 17 particularly depends on the diameters of the heat transfer members 17 and the electrochemical cells 15. The larger the diameter of the electrochemical cells 15 and the smaller the diameter of the heat transfer members 17, the smaller is the number of electrochemical cells 15 which can be arranged around a heat transfer member 17 without forming a space which is too large for a satisfying heat transfer.

The embodiments shown in figures 8 and 9 differ in the cross sectional shape of the heat transfer members 17. In the embodiment shown in figure 8, the heat transfer members 17 have a circular cross sectional shape and in the embodiment shown in figure 9, the heat transfer members 17 have a square cross sectional shape.

Besides the shapes shown in figures 8 and 9, the heat transfer members 17 may have any other shape, for example oval, or polygonal with any number of edges. However, particularly preferably, the heat transfer members 17 have a circular cross sectional shape as shown in fig-ure 8.

If the heat transfer members 17 are pipes, it is possible to use pipes having different cross sectional shapes and/or different diameters in one electrochemical energy storage device. However, it is particularly preferred that all heat transfer members 17 have the same shape. Different diameters may be preferred, if the quantity of heat which has to be dissipated by the heat transfer members or which has to be supplied by the heat transfer members is different at different positions in the electrochemical energy storage device 1. In this case, for removing a larger quantity of heat, a larger diameter is preferred in those areas of the electrochemical energy storage device where the larger quantity of heat occurs. Accordingly, for supplying a larger amount of heat, a larger diameter is preferred in those areas the larger quantity of heat is needed.

In the embodiments shown above, the electrochemical cells 15 are arranged adjacent to each other in a rectangular lattice. However, the arrangement of the electrochemical cells 15 is not limited thereto.

For example, the electrochemical cells may be arranged in a closest packing manner. Such is shown in a plan view in figure 10. In this case, the electrochemical cells having a circular cross sectional shape are arranged in an equilateral triangular lattice. The heat transfer members 17 then are disposed in such a way that they contact three electrochemical cells 15.

However, besides the rectangular lattice and the triangular lattice shown here, the electrochemical cells may be arranged in any other lattice shape.

Examples

A simulation experiment was carried out to evaluate the effect of the presence or absence of the heat transfer member 17 transferring heat by heat conduction in the solid material and the positional relationship between the heat transfer member 17 and the first duct 21 on the temperature characteristics at the time of discharge of the electrochemical energy storage device.

For examples 1 to 3, 25 single electrochemical cells 15 each having diameters of about 100 mm and lengths of 500 mm were arranged adjacent to each other in a grid of 5 times 5 as shown in figures 2 and 3 in a storage space 19 of a box 43 closed by a lid 47, each made of stainless steel (SUH409L, thermal conductivity 27 W/m*K). A hollow pipe-shaped heat transfer member 17 having an outer radius of 38 mm and an inner radius of 32 mm was arranged in the 16 spaces formed thereby. The remaining storage space 19 is filled with sand material. In the examples 1 to 3 only the arrangement of the heat transfer members 17 is different from each other. It is noted that each electrochemical cell 15 can be continuously discharged for four hours at an output of 280 W/DC.

In example 1, the heat transfer members 17 penetrate into the first duct 21 and the upper end 91 is brought into contact with the upper surface of the first duct 21 as shown in figure 4.

In example 2, not according to the invention, the heat transfer members 15 do not pass into the first duct 21 and the upper end 91 of the heat transfer members 17 is brought into contact with the lower surface of the first duct 21 as shown in figure 5.

According to example 3, not according to the invention, the upper end 91 of the heat transfer members 17 is separated from the lower surface of the first duct 21 by a distance d=5 mm as shown in figure 6.

For comparison, an electrochemical energy storage device in which the electrochemical cells were arranged in the same ways as in examples 1 to 3 and which does not contain heat transfer members is used.

With respect to these examples and comparative example, temperature distributions at three different height positions of the electrochemical cell 15, i.e. "upper portion", "middle portion", and "lower portion" were simulated in the case where discharge was performed at a target temperature of 305 ° C. "Upper part", "Middle part", and "Lower part" are respectively set to the position of 400 mm. 250 mm. 20 mm from the bottom surface of the electrochemical cell 15.

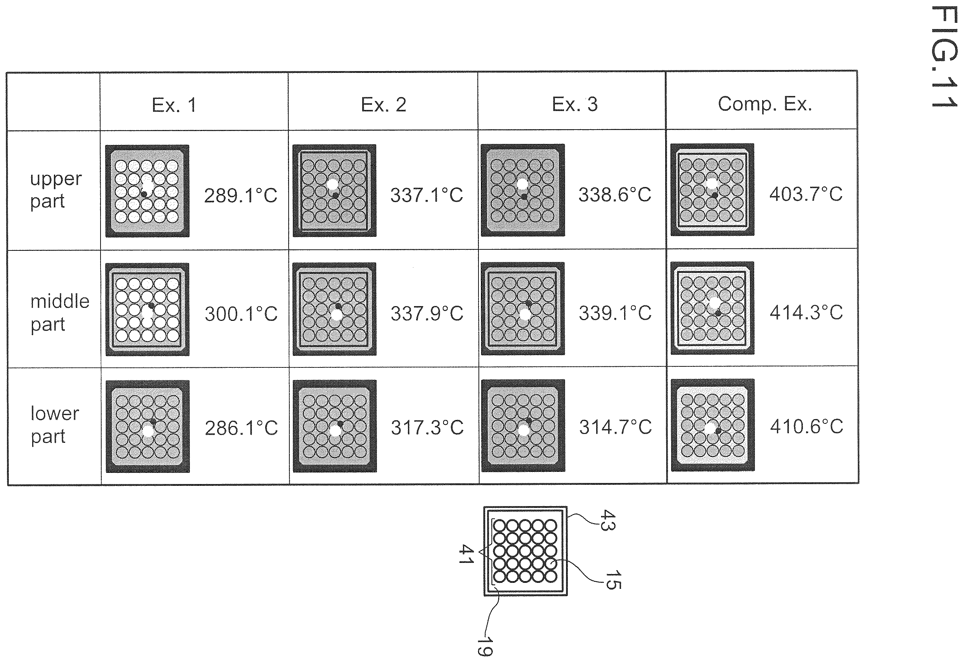

Figure 11 is a view showing the temperature distributions in the "upper part", the "middle part", and the "lower part" for examples 1 to 3 and the comparative example obtained by simulation, and the maximum temperature in the temperature distribution. As shown in the lower part of the figure, in each temperature distribution, the battery pack 41 composed of 25 electrochemical cells 15 is arranged in the storage space 19 surrounded by the box 43. However, illustration of the heat transfer member 17 is omitted.

In addition, in the part of the battery pack 41 occupying the central portion in the storage space 19, the temperature becomes higher as the color becomes darker. The white circle indicates the maximum temperature position.

From figure 11, it can be seen that the temperature tends to be highest at approximately at the center of any electrochemical cell and at any height position.

Further, in the comparative example in which no heat transfer members 17 are provided, the maximum temperature exceeds 400 °C regardless of the height position, whereas in the first to third embodiments in which heat transfer members 17 are provided, the temperature is kept at 340 °C or less at the maximum. These results indicate that providing the heat transfer members 17 is effective for heat dissipation during discharge of the electrochemical energy storage device.

In particular, with regard to example 1 in which the heat transfer members 17 penetrate into the first duct 21, although the maximum temperature at the "middle portion" slightly exceeded 300 °C the temperature was almost 300 °C or less regardless of the height position, and was below the target temperature of 305 °C. Moreover, the temperature difference in the plane was small. This shows that the configuration of the first embodiment is extremely effective for heat dissipation during discharge of the electrochemical energy storage device.

On the other hand, in examples 2 and 3, although the maximum temperature was higher than that in example 1 and exceeded the target temperature of 305 °C, the temperature difference to that of the comparative example was significant. In examples 2 and 3, the temperature in the "lower portion" tended to be lower than that in the "upper portion" and the "middle portion", and in the "upper portion" and the "middle portion", the temperature difference between the central portion and the peripheral portion was relatively remarkable. These results indicate that the configurations of examples 2 and 3 are also effective to a certain extent for heat dissipation during discharge of the module battery.

List of reference numbers

**[0125]**

| | |
|---|---|
| 1 | electrochemical energy storage device |
| 3 | housing |
| 5 | inlet for temperature control medium |
| 7 | outlet for temperature control medium |
| 9 | heat exchanger |
| 11 | heating device |
| 13 | delivery device |
| 15 | electrochemical cell |
| 17 | heat transfer member |
| 19 | space (filled with solid or liquid medium) |
| 21 | first duct |
| 23 | second duct |
| 25 | blind |
| 27 | inner pipe |
| 29 | outer pipe |
| 31 | closed end |
| 33 | gap |
| 35 | first wall |
| 37 | second wall |
| 39 | space |
| 41 | battery pack |
| 43 | box |
| 45 | opening |
| 47 | lid |
| 49 | rim |
| 51 | negative electrode terminal |
| 53 | positive electrode terminal |
| 55 | connection terminal |
| 57 | base |

| | |
|---|---|
| 59 | outer plate |
| 61 | inner plate |
| 63 | heat insulating material |
| 65 | outer plate |
| 67 | inner plate |
| 69 | heat insulating material |
| 71 | gap |
| 73 | gap |
| 75 | insulating cushioning material |
| 77 | first fan |
| 79 | second fan |
| 81 | side heater |
| 83 | bottom heater |
| 85 | top surface of second duct 23 |
| 87 | insulator |
| 89 | lower end of heat transfer member 17 |
| 91 | upper end of heat transfer member 17 |
| 93 | heat transferred from the electrochemical cell to the heat transfer member |
| 95 | heat transferred to the upper end 91 |
| 97 | heat transferred to the lower end 89 |
| 99 | external air |
| 101 | air flow through first duct 21 |
| 103 | air released to environment |
| 105 | external air |
| 107 | air flow through the second duct 23 |

**Claims**

1. An electrochemical energy storage device comprising a plurality of electrochemical cells (15) in a containing space in a housing (3), wherein the electrochemical energy storage device (1) comprises a first duct which runs parallel to the top or the bottom of the housing (3) and one or more heat transfer members (17) which are arranged in spaces (19) between the electrochemical cells (15), **characterized in that** at least one of the heat transfer members (17) protrudes into the first duct (21).

2. The electrochemical energy storage device according to claim 1, wherein the spaces (19) surrounding the electrochemical cells (15) and the heat transfer members (17) are filled with a liquid or a solid material, the solid material preferably being a particulate material, which preferably is selected from sand, metal, ceramics or glass.

3. The electrochemical energy storage device according to claim 1 or 2, wherein the heat transfer members (17) are plates, solid rods with any cross sectional shape or pipes with any cross sectional shape.

4. The electrochemical energy storage device according to claim 1 or 2, wherein the heat transfer members (17) are pipes or rods with any cross sectional shape and the ratio of the number of electrochemical cells (15) to the number of heat transfer members (17) is in a range from 1 : 4 to 10 :1.

5. The electrochemical energy storage device according to any of claims 1 to 4, wherein the surface area of outer heat transfer members (17) which are arranged closer to the walls of the housing (3) is smaller than the surface area of inner heat transfer members (17) which are arranged in the middle of the housing (3).

6. The electrochemical energy storage device according to any of claims 1 to 4, wherein the ratio of the surface area of outer heat transfer members (17), which are arranged closer to the walls of the housing (3), to the surface area of inner heat transfer members (17), which are arranged in the middle of the housing (3), is in a range from 0.1 to 1.

7. The electrochemical energy storage device according to any of claims 1 to 6, further comprising a second duct which is disposed at the top or the bottom of the housing.

8. The electrochemical energy storage device according to claim 7, wherein the electrochemical energy storage device comprises the second duct at the bottom and a bottom heater is disposed on the second duct.

9. The electrochemical energy storage device according to claim 8, further comprising a second intake fan capable of supplying air to the second duct from the outside, wherein the second duct includes a second intake port to which air is supplied from the second intake fan, a second internal space to which air is supplied from the second intake port, the second internal space being located so that the bottom heater is interposed between the second internal space and a range of arrangement of the heat transfer members in the containing space, and a second exhaust port from which air having passed through the second internal space is discharged to the outside.

10. The electrochemical energy storage device according to any of claims 1 to 9, wherein the housing comprises a box having insulating capability, the box having an opening occluded by a lid having insulating capability.

11. The electrochemical energy storage device according to claims 1 to 10, wherein the first duct is disposed between the box and the lid above the electrochemical cells.

12. The electrochemical energy storage device according to any of claims 1 to 11, wherein the heat transfer members protruding into the first duct are in contact with a surface of the first duct opposite of the containing space in a direction of extension of the heat transfer members.

13. The electrochemical energy storage device according to any of claims 1 to 12, further comprising a first intake fan capable of supplying air to the first duct from the outside, wherein the first duct includes a first intake port to which air is supplied from the first intake fan, a first internal space to allow heat to be transferred from the heat transfer members to air supplied from the first intake port, and a first exhaust port from which air having passed through the first internal space is discharged to the outside.

14. The electrochemical energy storage device according to any of claims 1 to 13, wherein the heat transfer members are made of one or more types of metal selected from the group consisting of aluminum, copper, steel, and alloys comprising at least one of these metals.

15. The electrochemical energy storage device according to any of claims 1 to 14, wherein the electrochemical cells are arranged to form a square lattice in plan view, and the heat transfer members are each disposed at a central location of a unit lattice of the square lattice, the heat transfer members preferably being each in contact with four cells constituting the unit lattice among the plurality of cells.

**Patentansprüche**

1. Elektrochemische Energiespeichervorrichtung, umfassend eine Mehrzahl von elektrochemischen Zellen (15) in einem Aufnahmeraum in einem Gehäuse (3), wobei die elektrochemische Energiespeichervorrichtung (1) einen ersten Kanal, der parallel zu der Oberseite oder der Unterseite des Gehäuses (3) verläuft, und ein oder mehrere Wärmeübertragungselemente (17) umfasst, die in Räumen (19) zwischen den elektrochemischen Zellen (15) angeordnet sind, **dadurch gekennzeichnet, dass** mindestens eines der Wärmeübertragungselemente (17) in den ersten Kanal (21) hineinragt.

2. Elektrochemische Energiespeichervorrichtung nach Anspruch 1, wobei die Räume (19), die die elektrochemischen Zellen (15) und die Wärmeübertragungselemente (17) umgeben, mit einer Flüssigkeit oder einem festen Material gefüllt sind, wobei das feste Material vorzugsweise ein teilchenförmiges Material ist, das vorzugsweise aus Sand, Metall, Keramik oder Glas ausgewählt ist.

3. Elektrochemische Energiespeichervorrichtung nach Anspruch 1 oder 2, wobei die Wärmeübertragungselemente (17) Platten, massive Stäbe mit beliebiger Querschnittsform oder Rohre mit beliebiger Querschnittsform sind.

4. Elektrochemische Energiespeichervorrichtung nach Anspruch 1 oder 2, wobei die Wärmeübertragungselemente (17) Rohre oder Stäbe mit beliebiger Querschnittsform sind und das Verhältnis der Anzahl elektrochemischer Zellen (15) zu der Anzahl von Wärmeübertragungselementen (17) in einem Bereich von 1: 4 bis 10: 1 liegt.

5. Elektrochemische Energiespeichervorrichtung nach einem der Ansprüche 1 bis 4, wobei die Oberfläche von äußeren Wärmeübertragungselementen (17), die näher an den Wänden des Gehäuses (3) angeordnet sind, kleiner ist als die Oberfläche von inneren Wärmeübertragungselementen (17), die in der Mitte des Gehäuses (3) angeordnet sind.

6. Elektrochemische Energiespeichervorrichtung nach einem der Ansprüche 1 bis 4, wobei das Verhältnis der Oberfläche von äußeren Wärmeübertragungselementen (17), die näher an den Wänden des Gehäuses (3) angeordnet sind, zu der Oberfläche von inneren Wärmeübertragungselementen (17), die in der Mitte des Gehäuses (3) angeordnet sind, in einem Bereich von 0,1 bis 1 liegt.

7. Elektrochemische Energiespeichervorrichtung nach einem der Ansprüche 1 bis 6, ferner umfassend einen zweiten Kanal, der an der Oberseite oder der Unterseite des Gehäuses angeordnet ist.

8. Elektrochemische Energiespeichervorrichtung nach Anspruch 7, wobei die elektrochemische Energiespeichervorrichtung den zweiten Kanal an der Unterseite umfasst und ein unteres Heizelement auf dem zweiten Kanal angeordnet ist.

9. Elektrochemische Energiespeichervorrichtung nach Anspruch 8, ferner umfassend ein zweites Ansauggebläse, das in der Lage ist, dem zweiten Kanal Luft von außen zuzuführen, wobei der zweite Kanal eine zweite Ansaugöffnung, der Luft von dem zweiten Ansauggebläse zugeführt wird, einen zweiten Innenraum, dem Luft von der zweiten Ansaugöffnung zugeführt wird, wobei der zweite Innenraum so angeordnet ist, dass das untere Heizelement zwischen dem zweiten Innenraum und einem Anordnungsbereich der Wärmeübertragungselemente in dem Aufnahmeraum eingefügt ist, und eine zweite Abluftöffnung umfasst, aus der Luft, die durch den zweiten Innenraum geströmt ist, nach außen abgeführt wird.

10. Elektrochemische Energiespeichervorrichtung nach einem der Ansprüche 1 bis 9, wobei das Gehäuse einen Kasten mit Isolierfähigkeit umfasst, wobei der Kasten eine Öffnung aufweist, die durch einen Deckel mit Isolierfähigkeit verschlossen ist.

11. Elektrochemische Energiespeichervorrichtung nach den Ansprüchen 1 bis 10, wobei der erste Kanal zwischen dem Kasten und dem Deckel oberhalb der elektrochemischen Zellen angeordnet ist.

12. Elektrochemische Energiespeichervorrichtung nach einem der Ansprüche 1 bis 11, wobei die Wärmeübertragungselemente, die in den ersten Kanal hineinragen, in Kontakt mit einer Oberfläche des ersten Kanals sind, die dem Aufnahmeraum in einer Ausdehnungsrichtung der Wärmeübertragungselemente gegenüberliegt.

13. Elektrochemische Energiespeichervorrichtung nach einem der Ansprüche 1 bis 12, ferner umfassend ein erstes Ansauggebläse, das in der Lage ist, dem ersten Kanal Luft von außen zuzuführen, wobei der erste Kanal eine erste Ansaugöffnung, der Luft von dem ersten Ansauggebläse zugeführt wird, einen ersten Innenraum, um zu ermöglichen, dass Wärme von den Wärmeübertragungselementen auf Luft übertragen wird, die von der ersten Ansaugöffnung zugeführt wird, und eine erste Abluftöffnung umfasst, aus der Luft, die durch den ersten Innenraum geströmt ist, nach außen abgeführt wird.

14. Elektrochemische Energiespeichervorrichtung nach einem der Ansprüche 1 bis 13, wobei die Wärmeübertragungselemente aus einer oder mehreren Arten von Metall hergestellt sind, die ausgewählt sind aus der Gruppe bestehend aus Aluminium, Kupfer, Stahl und Legierungen, die mindestens eines dieser Metalle umfassen.

15. Elektrochemische Energiespeichervorrichtung nach einem der Ansprüche 1 bis 14, wobei die elektrochemischen Zellen so angeordnet sind, dass sie in Draufsicht ein quadratisches Gitter bilden, und die Wärmeübertragungselemente jeweils an einer zentralen Stelle eines Einheitsgitters des quadratischen Gitters angeordnet sind, wobei die Wärmeübertragungselemente vorzugsweise jeweils mit vier Zellen in Kontakt sind, die das Einheitsgitter unter den mehreren Zellen bilden.

**Revendications**

1. Dispositif de stockage d'énergie électrochimique comprenant une pluralité de cellules électrochimiques (15) dans un espace de réception dans un boîtier (3), le dispositif de stockage d'énergie électrochimique (1) comprenant une première conduite qui chemine parallèlement au sommet ou à la base du boîtier (3) et un ou plusieurs éléments de transfert de chaleur (17) qui sont disposés dans des espaces (19) entre les cellules électrochimiques (15), **caractérisé en ce qu'**au moins un des éléments de transfert de chaleur (17) fait saillie à l'intérieur de la première conduite (21).

2. Dispositif de stockage d'énergie électrochimique selon la revendication 1, dans lequel les espaces (19) entourant les cellules électrochimiques (15) et les éléments de transfert de chaleur (17) sont remplis d'un matériau liquide ou solide, le matériau solide étant de préférence un matériau particulaire, qui de préférence est choisi parmi du sable, du métal, de la céramique et du verre.

3. Dispositif de stockage d'énergie électrochimique selon la revendication 1 ou 2, dans lequel les éléments de transfert de chaleur (17) sont des plaques, des tiges pleines avec n'importe quelle forme de section transversale ou des tuyaux avec n'importe quelle forme de section transversale.

4. Dispositif de stockage d'énergie électrochimique selon la revendication 1 ou 2, dans lequel les éléments de transfert de chaleur (17) sont des tuyaux ou des tiges avec n'importe quelle forme de section transversale et le rapport entre le nombre de cellules électrochimiques (15) et le nombre d'éléments de transfert de chaleur (17) se situe dans une plage allant de 1/ 4 à 10/ 1.

5. Dispositif de stockage d'énergie électrochimique selon l'une quelconque des revendications 1 à 4, dans lequel l'aire d'éléments de transfert de chaleur externes (17) qui sont plus proches des parois du boîtier (3) est inférieure à l'aire d'éléments de transfert de chaleur internes (17) qui se trouvent au milieu du boîtier (3).

6. Dispositif de stockage d'énergie électrochimique selon l'une quelconque des revendications 1 à 4, dans lequel le rapport entre l'aire d'éléments de transfert de chaleur externes (17) qui sont plus proches des parois du boîtier (3) et l'aire d'éléments de transfert de chaleur internes (17) qui se trouvent au milieu du boîtier (3) se situe dans une plage allant de 0,1 à 1.

7. Dispositif de stockage d'énergie électrochimique selon l'une quelconque des revendications 1 à 6, comprenant en outre une deuxième conduite qui est disposée au sommet ou à la base du boîtier.

8. Dispositif de stockage d'énergie électrochimique selon la revendication 7, le dispositif de stockage d'énergie électrochimique comprenant la deuxième conduite à la base et un élément chauffant inférieur étant disposé sur la deuxième conduite.

9. Dispositif de stockage d'énergie électrochimique selon la revendication 8, comprenant en outre un deuxième ventilateur d'admission pouvant fournir de l'air à la deuxième conduite depuis l'extérieur, dans lequel la deuxième conduite comporte un deuxième orifice d'admission auquel de l'air est fourni depuis le deuxième ventilateur d'admission, un deuxième espace interne auquel de l'air est fourni depuis le deuxième orifice d'admission, le deuxième espace interne étant positionné de telle sorte que l'élément chauffant inférieur est intercalé entre le deuxième espace interne et une plage d'agencement des éléments de transfert de chaleur dans l'espace de réception, et un deuxième orifice d'échappement depuis lequel de l'air ayant traversé le deuxième espace interne est évacué à l'extérieur.

10. Dispositif de stockage d'énergie électrochimique selon l'une quelconque des revendications 1 à 9, dans lequel le boîtier comprend une boîte possédant une capacité d'isolation, la boîte comportant une ouverture obstruée par un couvercle possédant une capacité d'isolation.

11. Dispositif de stockage d'énergie électrochimique selon les revendications 1 à 10, dans lequel la première conduite est disposée entre la boîte et le couvercle au-dessus des cellules électrochimiques.

12. Dispositif de stockage d'énergie électrochimique selon l'une quelconque des revendications 1 à 11, dans lequel les éléments de transfert de chaleur faisant saillie à l'intérieur de la première conduite sont en contact avec une surface de la première conduite à l'opposé de l'espace de réception dans une direction d'extension des éléments de transfert de chaleur.

13. Dispositif de stockage d'énergie électrochimique selon l'une quelconque des revendications 1 à 12, comprenant en outre un premier ventilateur d'admission pouvant fournir de l'air à la première conduite depuis l'extérieur, dans lequel la première conduite comporte un premier orifice d'admission auquel de l'air est fourni depuis le premier ventilateur d'admission, un premier espace interne pour permettre à la chaleur d'être transférée des éléments de transfert de chaleur à de l'air fourni depuis le premier orifice d'admission, et un premier orifice d'échappement depuis lequel de l'air ayant traversé le premier espace interne est évacué à l'extérieur.

14. Dispositif de stockage d'énergie électrochimique selon l'une quelconque des revendications 1 à 13, dans lequel les éléments de transfert de chaleur sont faits d'un ou plusieurs types de métal choisis dans le groupe constitué par l'aluminium, le cuivre, l'acier, et les alliages comprenant au moins un de ces métaux.

**15.** Dispositif de stockage d'énergie électrochimique selon l'une quelconque des revendications 1 à 14, dans lequel les cellules électrochimiques sont agencées pour former un réseau carré dans une vue en plan, et chacun des éléments de transfert de chaleur est disposé à un emplacement central d'une maille du réseau carré, chacun des éléments de transfert de chaleur étant de préférence en contact avec quatre cellules constituant la maille parmi la pluralité de cellules.

FIG.1

FIG.2

FIG.3

FIG.4

FIG.5

FIG.6

FIG.7

FIG.8

FIG.9

FIG.10

EP 4 378 020 B1

# FIG.11

| | Ex. 1 | Ex. 2 | Ex. 3 | Comp. Ex. |
|---|---|---|---|---|
| upper part | 289.1°C | 337.1°C | 338.6°C | 403.7°C |
| middle part | 300.1°C | 337.9°C | 339.1°C | 414.3°C |
| lower part | 286.1°C | 317.3°C | 314.7°C | 410.6°C |

43 15 41 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017102697 A
- JP 2000297989 A
- US 7955725 B
- WO 2019206864 A
- EP 0044753 A
- US 5158841 A
- US 20180062225 A
- US 20210075076 A